# EUROPÄISCHE PATENTSCHRIFT

(11) **EP 1 015 865 B1**
(45) Veröffentlichungstag und Bekanntmachung des Hinweises auf die Patenterteilung: **14.07.2004**
(21) Anmeldenummer: 97951976.6
(22) Anmeldetag: 26.11.1997
(51) Int. Cl.: G01M 3/40

(54) **VERFAHREN UND VORRICHTUNG ZUR ZERSTÖRUNGSFREIEN DICHTIGKEITSPRÜFUNG VON MIT FLÜSSIGKEIT GEFÜLLTEN BEHÄLTNISSEN**
METHOD AND DEVICE FOR NONDESTRUCTIVELY TESTING FLUID-FILLED CONTAINERS FOR LEAKTIGHTNESS
PROCEDE ET DISPOSITIF DE VERIFICATION NON DESTRUCTIVE DE L'ETANCHEITE DE RECIPIENTS REMPLIS DE LIQUIDE

(30) Priorität: 10.12.1996 DE 19651208
(43) Veröffentlichungstag der Anmeldung: 05.07.2000
(73) Patentinhaber: Boehringer Ingelheim Pharma GmbH & Co.KG, 55218 Ingelheim am Rhein (DE)
(72) Erfinder: WITTEKIND, Jürgen, D-60596 Frankfurt am Main (DE); POSS, Gerhard, D-69198 Schriesheim (DE); KUEHNEL, Andreas, D-61440 Oberursel (DE)
(74) Vertreter: Fuchs Mehler Weiss & Fritzsche
(86) Internationale Anmeldenummer: PCT/EP1997/006580
(87) Internationale Veröffentlichungsnummer: WO 1998/026265

(56) Entgegenhaltungen:
- US-A- 4 147 431
- US-A- 4 243 932
- US-A- 5 115 668

## Beschreibung

Die Erfindung bezieht sich auf ein Verfahren zur zerstörungsfreien Dichtigkeitsprüfung von mit Flüssigkeit gefüllten Behältnissen. Die Erfindung betrifft ferner eine entsprechende Vorrichtung zur zerstörungsfreien Dichtigkeitsprüfung von mit Flüssigkeit gefüllten Behältnissen.

Die Notwendigkeit einer Dichtigkeitsprüfung von mit Flüssigkeit befüllten Behältnissen ergibt sich in vielen Bereichen der Technik, beispielsweise im Pharmabereich. Das Behältnis kann dann die Kartusche einer Pharmaverpackung sein, insbesondere eine Kartusche für ein treibgasfreies Dosieraerosol.

Derartige Kartuschen haben sich bislang einer wirtschaftlichen Dichtheitsprüfung entzogen.

In der internationalen Patentanmeldung WO 91/14468 ist ein derartiges Behältnis zur treibgasfreien Applikation einer dosierten Menge eines flüssigen Arzneimittels als Spray zur inhalativen Anwendung vom Typ her beschrieben. Die Lösung des Arzneimittels befindet sich in einem austauschbaren Vorratsbehälter, der aus einem formstabilen Außenbehälter und einem flexiblen Innenbehälter besteht. Aus diesem Vorratsbehälter wird eine genau dosierte Menge der Wirkstofflösung in eine Pumpkammer gefördert und von dort unter hohem Druck durch eine kleine Düse zerstäubt, wobei die gebildeten Partikel von dem Patienten inhaliert werden. Geeignete Vorratsbehälter sind beispielsweise in der europäischen Patentschrift 532 873 beschrieben. Der Vorteil dieser doppelwandigen Behälter besteht darin, daß die Lösung des Arzneimittels entnommen werden kann, ohne daß Luft- oder Gasblasen in den inneren Behälter gelangen. Der Druckausgleich erfolgt dadurch, daß der innere flexible Behälter in sich zusammenfällt, während der äußere formstabile Behälter vor mechanischen Beschädigungen schützt. Der äußere Behälter enthält Öffnungen zum Druckausgleich. Würden sich in dem inneren Behälter größere Mengen Luft- oder Gasreste ansammeln, wäre eine genaue und reproduzierbare Einzeldosierung nicht mehr bei jeder einzelnen Applikation gewährleistet. Eine Undichtigkeit in dem inneren Behälter, dessen Wandung aus einer sehr dünnen extrudierten Folie besteht, hätte zur Folge, daß sich im Verlauf des Gebrauchs, Gas- und Luftblasen bilden und möglicherweise eine geringere Menge an Wirkstofflösung inhaliert würde. Zur Erzielung einer größtmöglichen Sicherheit ist es deshalb erforderlich, die mit der hochwirksamen Arzneimittellösung gefüllten Behälter dahingehend zu prüfen, ob eine Leckage des inneren Behälters vorliegt.

Derartige Kartuschen haben sich bislang einer wirtschaftlichen Dichtheitsprüfung entzogen.

Zum Spurennachweis flüchtiger Stoffe werden in bekannter Weise prinzipiell hochempfindliche Sensoren wie z.B. der Flammenionisationsdetektor oder der Photoionisationsdetektor verwendet. Diese Sensoren sind jedoch auf eine Gasatmosphäre angewiesen, in der mindestens Atmosphärendruck herrscht; eine direkte Messung im Vakuum ist damit nicht möglich. Um die Dichtigkeit eines mit einer Flüssigkeit befüllten Behältnisses prüfen zu können, bedarf es jedoch der Einbringung in ein Vakuum, damit bei einer Leckage auch eine ausreichend flüchtige Stoffmenge zum Nachweis zur Verfügung steht. Ferner ist es mit keinem der bisher bekannten Sensoren möglich, Wasserspuren in einer Gasatmosphäre bei einem Druck unter dem Atmosphärendruck nachzuweisen.

Es ist auch in der Gasanalysetechnik bekannt, das Analysegas emissionsspektrometrisch zu untersuchen, indem das Analysegas in einem evakuierten Gasentladungsraum, dessen Druck zwischen 0,01 und 5 Torr liegt, durch eine konstante Hochfrequenzentladung ionisiert wird, d.h. ein Plasma erzeugt wird, wobei die Leuchterscheinung spektral zerlegt wird und die Intensitäten der für die ionisierten Gase charakteristischen Spektrallinien lichtelektrisch gemessen werden (DE-Auslegeschrift 1 124 734). Gleichartige Verfahren und Geräte zur Gasanalyse zeigen der Aufsatz von Koch et. al. "Über ein neuen Verfahren zur spektralen Gasanalyse", in Angewandte Chemie, 71, 1959, Seite 545 bis 549; die GB 2 185 573 A; die DE 195 05 104 A1; die DE-Patentschrift 1 087 832; die US-A 3,024,745 und die DE-OS 1 598 303.

Diese bekannten Verfahren und Geräte sind jedoch auf die Analyse von zugeführtem Analysegas durch eine Spektralanalyse abgestellt und nicht auf die Dichtigkeitsprüfung von mit Flüssigkeit gefüllten Behältnissen.

Der Erfindung liegt die Aufgabe zugrunde, ein Verfahren und eine Vorrichtung zur zerstörungsfreien Dichtigkeitsprüfung von mit Flüssigkeit gefüllten Behältnissen anzugeben, das mit großer Genauigkeit und auf einfache Weise eine Leckage erkennen läßt.

Die Lösung dieser Aufgabe gelingt gemäß der Erfindung für das Verfahren mit den Schritten:
- Bereithalten der mit Flüssigkeit befüllten Behältnisse in einem Vakuum,
- Betreiben einer Gasentladung in dem Vakuum,
- Erfassen der von der Gasentladung ausgehenden Lichtemission, und
- Auswerten der Lichtemission auf Veränderungen durch infolge einer Leckage in den geprüften Behältnissen austretende flüchtige Behältnisinhaltsstoffe.

Hinsichtlich der Vorrichtung gelingt die Lösung der Aufgabe erfindungsgemäß mit
- einem Rezipienten, in dem ein gegenüber dem Atmosphärendruck verminderter Druck aufrechterhaltbar ist und in dem die zu prüfenden Behältnisse bereitgehalten sind,
- einer Gasentladungsstrecke in einem mit dem Rezipienten verbundenen Gefäß und elektrischen Vorrichtungen zum Betreiben der Gasentladung,
- einer lichtempfindlichen Sensor-Anordnung zum Erfassen des von der Gasentladung emittierten Lichtes, und
- einer Auswerteschaltung zum Auswerten des emittierten Lichtes auf Veränderungen durch infolge einer Leckage in den geprüften Behältnissen austretende flüchtige Behältnisinhaltsstoffe.

Ist eine Leckage in den Behältnissen vorhanden, so verflüchtigt sich aufgrund des Vakuums eine kleine Menge des Behältnisinhaltstoffes, wobei die zwischen zwei Elektroden betriebene Gasentladung durch diese Sfoffspuren sowohl eine Änderung der Helligkeit, als auch eine Änderung der spektralen Zusammensetzung des von der Gasentladung emittierten Lichts erfährt. Dieser Effekt erinnert zwar an die bekannten Methoden der Atomspektrometrie, bei denen die Lichtemission von Elementen aus einem mit hoher Leistung bei Atmosphärendruck betriebenen Plasma zur Detektion dieser Elemente verwendet wird, jedoch ist der Nachweis von Verbindungen, insbesondere von organischen Verbindungen, in einem Vakuum mit dieser Methode der Atomspektrometrie nicht möglich. Außerdem ist eine Dichtigkeitsprüfung von mit Flüssigkeit unter Atmosphärendruck gefüllten Behältnissen praktisch nicht möglich.

Die Methodik der Atomspektrometrie ist beispielsweise beschrieben in:
Hoffmann, H.J., Röhl, R.: "Plasma-Emissions-Spektrometrie".
Analytiker Taschenbuch Bd. 5, S. 69-92, Springer-Verlag (1985), und
Brockaert, J.A.C., Schickling, C., Bings, N.: "Mikrowellenplasmen für die Atomspektrometrie - Entwickungsstand und analytische Anwendungen". GIT Fachz. Lab. 4196, S. 323-327.

Der Einfluß der flüchtigen Behältnisinhaltsstoffe auf die Lichtemission der Gasentladung ist besonders deutlich, wenn gemäß einer Ausgestaltung der Erfindung das Bereithalten der Behältnisse und das Betreiben der Gasentladung bei einem Druck zwischen 0,5 und 50 mbar, vorzugsweise bei einem Druck zwischen 1 und 4 mbar, erfolgt.

Für die Dichtigkeitsprüfung ist es weiterhin nach einem weiterbildenden Merkmal der Erfindung förderlich, wenn die Gasentladung durch hochgespannte elektrische Energie betrieben wird, die mittels Elektroden oder kapazitiv oder induktiv eingespeist wird.

Besonders gute Ergebnisse sind erreichbar, wenn die Gasentladung mit einer Hochspannung betrieben wird, die eine Gleichspannung oder eine Wechselspannung mit einer Frequenz größer 50 Hz, vorzugsweise von 30-40 kHz sein kann.

Das Auswerten der Lichtemission kann nach verschiedenen Gesichtspunkten erfolgen. Ein Weg besteht gemäß einer Weiterbildung der Erfindung darin, daß die Verringerung der Helligkeit des von der Gasentladung emittierten Lichtes gegenüber der Grundhelligkeit bei bloßem Vorliegen der Restgasmoleküle der Luft im Vakuum erfaBt und diese Helligkeitsänderung in Verbindung mit einer entsprechenden, empirisch ermittelten Kalibrierkurve hinsichtlich der Konzentration des jeweiligen flüchtigen Behältnisinhaltsstoffes ausgewertet wird.

Ein weiterer Weg besteht gemäß einer Ausgestaltung der Erfindung darin, daß die Änderung der Wellenlänge des von der Gasentladung emittierten Lichtes erfaßt und hinsichtlich einer Aussage über die Art des flüchtigen Behältnisinhaltsstoffes ausgewertet wird.

Weitere ausgestaltende Merkmale der Erfindung, insbesondere hinsichtlich der erfindungsgemäßen Vorrichtung, sind Gegenstand von Unteransprüchen und ergeben sich anhand der nachfolgenden Beschreibung von in den Zeichnungen dargestellten Ausfiihrungsbeispielen.

Es zeigen:
- Fig. 1: ein erstes Ausführungsbeispiel einer erfindungsgemäßen Vorrichtung mit einer geraden Röhre für die Gasentladungsstrecke,
- Fig. 1a: eine Abwandlung mit einer U-förmig gebogenen Röhre für die Gasentladungsstrecke,
- Fig. 1b: eine Abwandlung mit einer gewendelten Röhre für die Gasentladungsstrecke, und
- Fig. 2: ein zweites Ausführungsbeispiel einer erfindungsgemäßen Vorrichtung mit einem koaxialen Röhrensystem für die Gasentladungsstrecke.

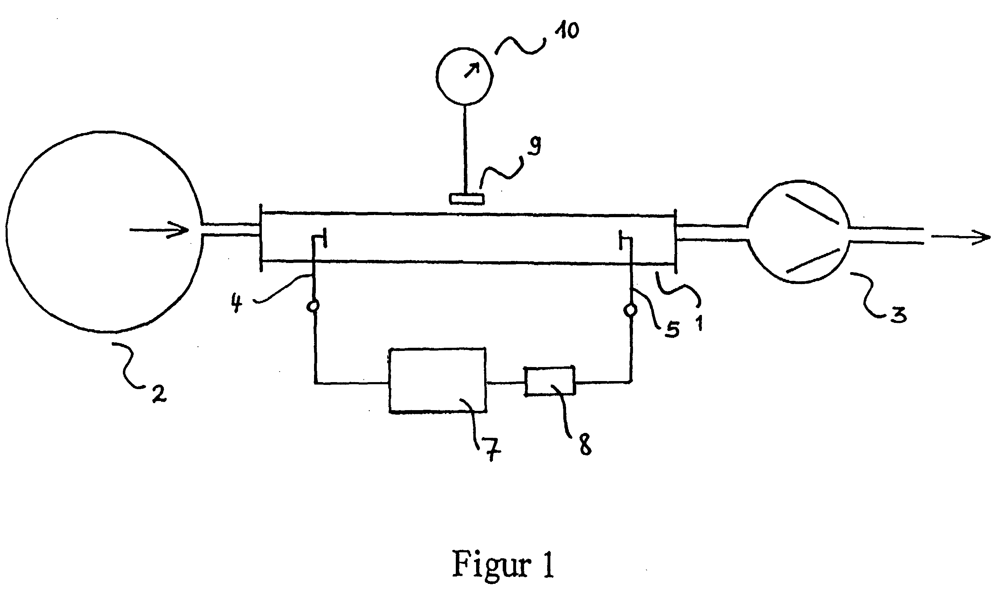

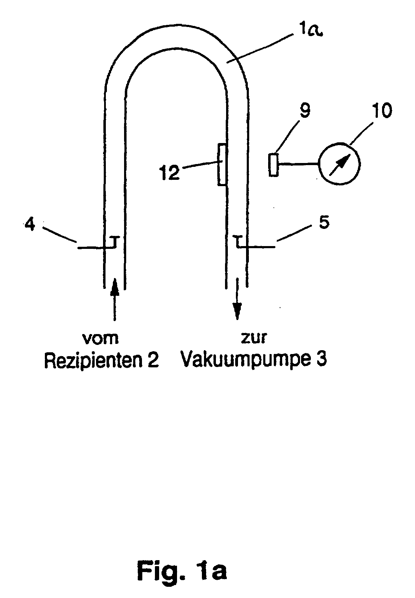

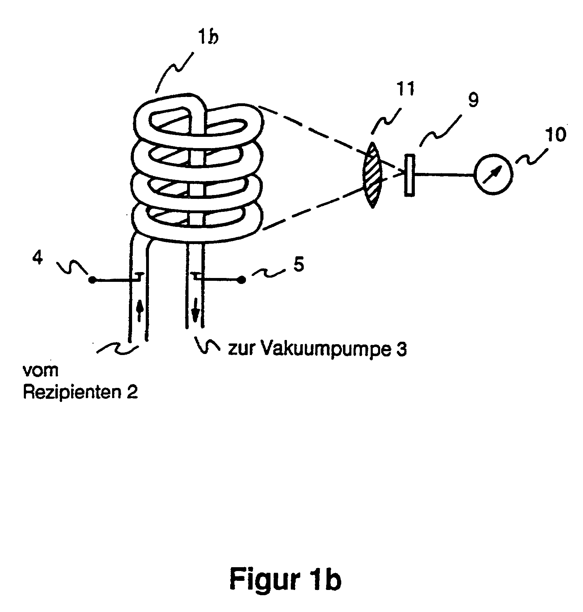

Die Fig. 1 zeigt eine Vorrichtung zur zerstörungsfreien Dichtigkeitsprüfung von mit Flüssigkeit gefüllten Behältnissen mit einem Gefäß in Form einer Röhre 1, die aus einem lichtdurchlässigen Material, z. B. Quarz oder Glas, besteht. In dieser Röhre ist ein gegenüber dem Atmosphärendruck verminderter Druck, ein Vakuum, aufrechterhaltbar. Sie ist zu diesem Zweck zwischen einen Rezipienten 2 und eine Vakuumpumpe 3 geschaltet. Die der Dichtigkeitsprüfung zu unterwerfenden befüllten Behältnisse werden in den Rezipienten 2 (und damit in das Vakuum) eingebracht, wobei im Fall von Undichtigkeiten (Leckagen) Spuren der abgefüllten Behältnisinhaltsstoffe auch in das Gefäß 1 gelangen, in dem sie dann auf die noch zu beschreibende Weise detektiert werden.

In das Gefäß 1 sind zwei Hochspannungselektroden 4, 5 eingesetzt, zwischen denen eine Gasentladungsstrecke 6 ausbildbar ist. Zum Betreiben der Gasentladungsstrecke 6 ist eine Hochspannungsquelle 7 vorgesehen, die über die Elektroden 4, 5 hochgespannte elektrische Energie in die Gasentladungsstrecke einspeist. Die angelegte Hochspannung kann eine Gleichspannung oder eine niederfrequente Wechselspannung oder eine hochfrequente Wechselspannung sein, wobei sich gezeigt hat, daß mit steigender Frequenz die emittierte Helligkeit weniger vom restlichen Gasdruck in der Röhre abhängt. Frequenzen im Bereich von 30-40 kHz haben sich als besonders günstig gezeigt, da bei diesen Frequenzen noch keine Störabstrahlung erfolgt.

Zur Begrenzung des über die Gasentladung fliessenden Stromes ist in den Stromkreis ein Vorwiderstand 8 eingeschaltet, der auch durch eine Drosselspule oder einen Transformator mit einem großen magnetischen Streufeld gebildet sein kann. Anstelle der eingesetzten Elektroden 4, 5 können auch flächige Aussenelektroden vorgesehen sein.

Anstelle über Elektroden ist die hochgespannte elektrische Energie auch kapazitiv oder induktiv in die Gasentladungsstrecke einspeisbar.

Die erfindungsgemäße Vorrichtung weist ferner eine lichtempfindliche Sensor-Anordnung, einen Photosensor 9, zum Erfassen des von der Gasentladung emittierten Lichtes auf. Der Photosensor kann beispielsweise ein Photowiderstand, eine Photodiode oder eine Photozelle sein.

Dem Photosensor 9 ist eine Auswertestufe 10 nachgeschaltet, die zum Auswerten des emittierten Lichtes auf Veränderungen durch die Behältnisinhaltsstoffspuren dient. Im einfachsten Fall ist die Auswertestufe ein Meßinstrument zur Messung des helligkeitsabhängigen elektrischen Signals des Photosensors. Sie kann auch durch einen Mikroprozessor gebildet werden.

Wird nun an die Elektroden 4, 5 eine Hochspannung angelegt, so werden bei vermindertem Druck die restlichen Gasmoleküle im Inneren der Röhre zwischen den Elektroden in Form einer Gasentladung zum Leuchten angeregt, wobei die Wellenlänge des emittierten Lichts von der Art der restlichen Gasmoleküle oder - im Falle von Edelgasen - der Gasatome bestimmt wird, während die Helligkeit von dem Druck in der Röhre und der Höhe der elektrischen Spannung bestimmt wird.

Dieser Vorgang an sich ist seit langem bekannt und findet beispielsweise in Leuchtreklameröhren eine breite Anwendung. Die Erfindung hat jedoch ihre Basis in dem Effekt, daß sowohl Helligkeit als auch Wellenlänge des emittierten Lichts durch Spuren flüchtiger Verbindungen signifikant verändert werden.

Es hat sich gezeigt, daß beim Vorliegen aus einer Leckage in den befüllten Behältnissen austretender flüchtiger organischer oder auch anorganischer Stoffe, auch in kleinsten Mengen, die Gasentladung eine deutliche Verringerung der Helligkeit gegenüber der Helligkeit, die sich in der Ausgangssituation einstellt, wenn nur die restlichen Gasmoleküle der Luft in der Röhre 1 vorliegen, eintritt. Diese Helligkeitsänderung ist proportional der Konzentration der flüchtigen Behältnisinhaltsstoffe, so daß anhand einer empirisch erstellten Kalibrierkurve eine direkte Aussage über die Konzentration der jeweiligen Stoffe gemacht werden kann.

Mit der Helligkeitsänderung einher geht ferner eine Änderung der Wellenlänge des emittierten Lichtes, so daß auch Aussagen über die Art der flüchtigen Stoffe möglich sind.

Befinden sich als Restgasmoleküle Luft, also überwiegend Stickstoff und Sauerstoff im Vakuum, so emittiert die Gasentladung ein rötlich/bläuliches Licht; werden nun beispielsweise Spuren von Ethanol in das Vakuum eingebracht, so verschiebt sich die Lichtemission zum kurzwelligen Bereich mit einer hellblauen Färbung und einem hohen Strahlungsanteil im nahen UV-Bereich. Gelangen Wasserspuren in das Vakuum, so nimmt die Gasentladung eine dunkelrote Farbe an mit einem Strahlungsanteil im IR-Bereich.

In beiden Fällen wird die Emission im sichtbaren Bereich deutlicht verringert.

Zur Messung der Helligkeitsänderungen des emittierten Lichtes findet vorzugsweise ein in einem weiten Bereich des Lichtspektrums wellenlängenunabhängiger Photosensor 9 Anwendung. Zum Nachweis eines bestimmten, vorgegebenen Stoffes verwendet man zweckmäßig einen Photosensor 9, der ein spezifisches, auf die Art des Stoffes abgestimmtes Empfindlichkeitsmaximum bei einer bestimmten Wellenlänge hat. Es können auch mehrere solcher Photosensoren mit Empfindlichkeitsmaxima bei unterschiedlichen Wellenlängen zum Detektieren von unterschiedlichen Stoffen vorgesehen sein. Die Wellenlängenänderungen können auch mit üblichen einschlägigen spektralempfindlichen Geräten als Auswertestufe 10 (oder als Teil davon) erfaßt werden.

Für das Gefäß 1, in welches die Hochspannungselektroden 4, 5 eingesetzt sind, zwischen denen die Gasentladungsstrecke 6 ausbildbar ist, sind verschiedene Gestaltungsmöglichkeiten gegeben.

Das Gefäß kann, wie in Fig. 1 dargestellt, eine gerade Röhre sein, kann aber auch, wie in Fig. 1a dargestellt, eine z. B. U-Förmig gebogene Röhre 1a sein, die eine besonders kompakte Bauform ermöglicht.

Gemäß der in Fig. 1b dargestellten Ausführungsweise kann das Gefäß auch als gewendelte Röhre 1b ausgeführt sein. Diese Ausführungsform ermöglicht neben einer kompakten Bauform eine besonders gute Ausnutzung der Lichtemission, wenn das Licht mittels einer zweckentsprechenden Optik, z. B. einer Sammellinse 11, vor dem Photosensor 9 gebündelt wird.

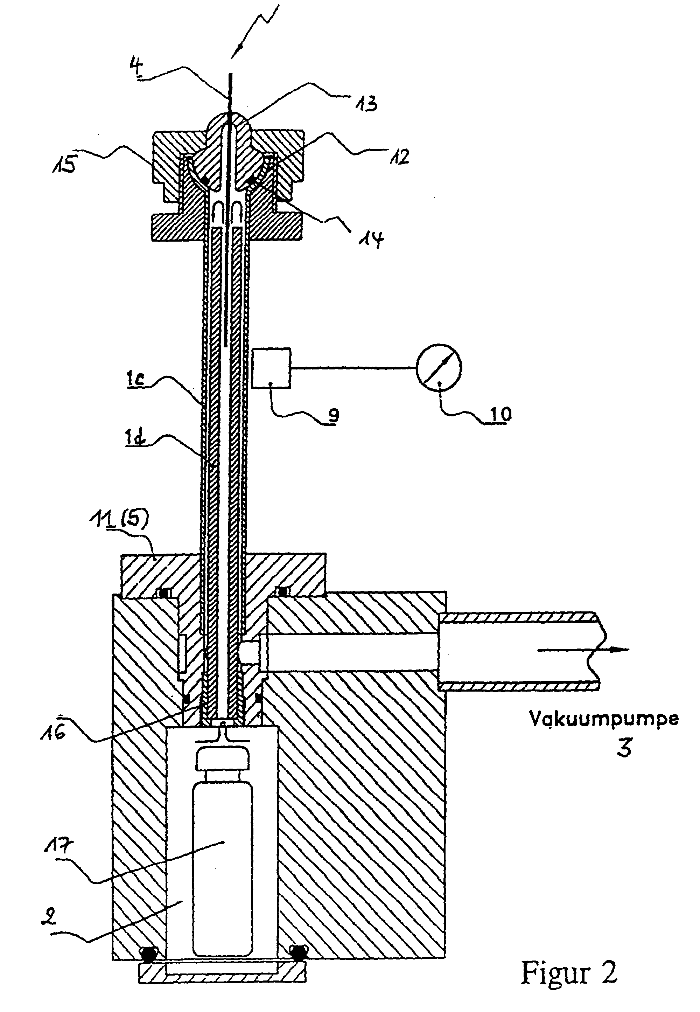

In der Fig. 2 ist eine weitere Ausführungsform der erfindungsgemäßen Vorrichtung dargestellt, die sich von den Fig. 1, 1a und 1b insbesondere durch eine prinzipiell andere Gestaltung des Gefässes 1 und der Gasentladungsstrecke 6 unterscheidet. Gleiche Teile sind mit demselben Bezugszeichen versehen. Bei der Vorrichtung nach der Fig. 2 besteht das GefäB 1 aus zwei koaxial ineinander angeordneten Röhren 1c, 1d, die in einem gemeinsamen Metallflansch 11 eingekittet sind und von denen die äußere Röhre an ihrem freien Ende verschlossen ist und an dem verschlossenen Ende eine eingeschmolzene Elektrode 4 trägt; die Gegenelektrode 5 der Fig. 1 wird in diesem Fall von dem Metallflansch 11 gebildet.

Die äußere Glasröhre wird von zwei Kugelschliffteilen 12 und 13 verschlossen, von denen das Teil 13 die Elektrode 4 trägt. Die Schliffteile sind mit einem Elastomer-Dichtring 14 abgedichtet, so daß auf die sonst üblichen Schliffschmiermittel verzichtet werden kann.

Die beiden Kugelschliffteile werden durch eine kappenartige Halterung 15 vakuumdicht zusammengedrückt.

Der mittels der (nicht dargestellten) Vakuumpumpe 3 abgepumpte Gasstrom ström zunächst durch die innere Röhre 1d, die zusätzlich in eine Gewindeschraubhülse 16 eingekittet ist, wird an dem, den Verschluß bildenden Kugelschliffteil 13 umgelenkt, strömt durch die äußere Röhre 1c zurück in den Metallflansch 11 und gelangt von dort zur Vakuumpumpe 3.

Werden nun beispielsweise von dem auf Dichtigkeit zu prüfenden befüllten Behältnis 17 in dem Rezipienten 2 geringe Leckmengen in das Vakuum emittiert, so führt das zu der beschriebenen Änderung in der Lichtemission, die von dem Photosensor 9 erfaßt und als elektrische Meßgröße dem Meßgerät 10 zugeführt wird.

An die Stelle des Meßgerätes 10 kann auch ein Komparator treten, der die elektrische Meßgröße des Photosensors 9 mit einem vorgegebenen Sollwert vergleicht und auf diese Weise eine automatische Entscheidung über den Prüfvorgang trifft. Dies gilt auch für die Ausführung nach Fig. 1.

Die beschriebene Ausfübrungsform nach Fig. 2 ermöglicht es in vorteilhafter Weise die Vorrichtung sehr kompakt auszuführen, so daß der Einbau z. B. in eine Maschine begünstigt wird. Außerdem ist es mit geringem Aufwand möglich, die Meßstrecke für Reinigungszwecke zu zerlegen.

Eine Verbesserung der Lichtausbeute kann erzielt werden, wenn die dem Photosensor 9 abgewandte Seite des Gefäßes verspiegelt ist oder wenn auf dieser Seite ein separater Spiegel 18 angebracht ist, wie dies beispielhaft in Fig. 1a dargestellt ist. Natürlich können diese Maßnahmen auch bei den anderen Gefäßformen nach den Fig. 1, 1b und 2 entsprechend angewendet werden.

Anhand von zwei nachfolgend dargestellten Beispielen soll die Nachweisempfindlichkeit des erfindungsgemäßen Verfahrens gezeigt werden. Im Beispiel 1 wird Ethanol, im Beispiel 2 Wasser in das Gefäß 1 eindosiert. Bei einem Druck von 2 mbar, einer Spannung von 2,5 kV und einem Vorwiderstand von 270 kΩ, beträgt jeweils das Photometersignal im Ausgangszustand (nur Stickstoff und Sauerstoffmoleküle als Restgas im Vakuum) 9,7 V (Leerlaufsignal).

In den zu den beiden Beispielen angegebenen Tabellen ist jeweils zu den einzelnen Stoffmengen (Dosen) der Absolutwert des Photometersignals sowie der Signalabstand zum Leerlaufsignal, d.h. die Abnahme der Helligkeit, angegeben.

Man erkennt eine signifikante Abnahme der Helligkeit mit wachsender Stoffkonzentration.

**Beispiel 1:**

| **In das Vakuum eindosierte Ethanolmenge [mg /s]** | **Photometer- signal [V]** | **Signalabstand zum Leerlauf- signal [V]** |
|---|---|---|
| 0,008 | 9.3 | 0,4 |
| 0,015 | 8,9 | 0,8 |
| 0,025 | 8,7 | 1,0 |
| 0,120 | 7,5 | 2.2 |
| 0,210 | 5.5 | 4,2 |
| 0,330 | 3,2 | 6.5 |
| 0,430 | 2,0 | 7,7 |
| 0.450 | 1,9 | 7.8 |
| 0,470 | 1,6 | 8,1 |

**Beispiel 2:**

| **In das Vakuum eindosierte Wassermenge [mg/s]** | **Photometer- Signal [V]** | **Signalabstand zum Leerfauf- signal [V]** |
|---|---|---|
| 0,008 | 9,4 | 0,3 |
| 0,013 | 8.9 | 0.8 |
| 0,030 | 7,9 | 1,8 |
| 0,051 | 5,2 | 4,5 |
| 0,160 | 2,2 | 7,5 |
| 0,170 | 2,0 | 7,7 |
| 0,210 | 1,6 | 8,1 |
| 0,400 | 1,1 | 8,6 |
| 0,470 | 1.0 | 8,7 |

Das vorstehend beschriebene Verfahren zur zerstörungsfreien Dichtigkeitsprüfung von mit Flüssigkeit befüllten Behältnissen sowie die zugehörige Vorrichtung eignen sich im besonderen für eine routinemäßige Prüfung im Rahmen der Abfüllung der Behältnisse. Das erfindungsgemäße Verfahren bzw. die zugehörige Vorrichtung eignen sich dabei insbesondere zur routinemäßigen Dichtigkeitsprüfung von in hohen Stückzahlen zu befüllenden Behältnissen. So können beispielsweise als Rezipient 2 automatisierte Mehrfachstationen , d.h. mehrere parallel geschaltete und entsprechend parallel beschickte Prüfkmmern oder größere Prüfkammern zur gemeinsamen Aufnahme mehrerer Behältnisse eingerichtet werden. Entsprechende Vorrichtungen, die auch evakuiert werden können, sind prinzipiell aus dem Stand der Technik bekannt und können ohne weiteres an die Vorrichtung, in der das erfindungsgemäße Verfahren durchgeführt wird, adaptiert werden, d.h. durch eine entsprechende Gestaltung des Anschlusses des Rezipienten 2 an das Gasentladungsgefäß 1 bzw. 1a bis 1d.

## Patentansprüche

1. Verfahren zur zerstörungsfreien Dichtigkeitsprüfung von mit Flüssigkeit gefüllten Behältnissen, mit den Schritten:
- Bereithalten der mit Flüssigkeit gefüllten Behältnisse in einem Vakuum,
- Betreiben einer Gasentladung in dem Vakuum,
- Erfassen der von der Gasentladung ausgehenden Lichtemission, und
- Auswerten der Lichtemission auf Veränderungen durch infolge einer Leckage in den geprüften Behältnissen austretende flüchtige Behältnisinhaltsstoffe.

2. Verfahren nach Anspruch 1, **dadurch gekennzeichnet, daß** das Bereithalten der Behältnisse und das Betreiben der Gasentladung bei einem Druck zwischen 0,5 und 50 mbar, vorzugsweise bei einem Druck zwischen 1 und 4 mbar erfolgt.

3. Verfahren nach Anspruch 1 oder 2, **dadurch gekennzeichnet, daß** die Gasentladung durch hochgespannte elektrische Energie betrieben wird, die mittels Elektroden oder kapazitiv oder induktiv eingespeist wird.

4. Verfahren nach Anspruch 3, **dadurch gekennzeichnet, daß** die Gasentladung mit einer Hochspannung betrieben wird, die eine Gleichspannung, oder eine Wechselspannung mit einer Frequenz größer 50 Hz, vorzugsweise von 30-40 kHz, ist.

5. Verfahren nach einem der Ansprüche 1 bis 4, **dadurch gekennzeichnet, daß** die Verringerung der Helligkeit des von der Gasentladung emittierten Lichtes, gegenüber der Grundhelligkeit bei bloßem Vorliegen der Restgasmoleküle der Luft im Vakuum, erfaßt und diese Helligkeitsänderung in Verbindung mit einer entsprechenden, empirisch ermittelten Kalibrierkurve hinsichtlich der Konzentration des jeweiligen flüchtigen Behältnisinhaltsstoffes ausgewertet wird.

6. Verfahren nach einem der Ansprüche 1 bis 5, dadurch gekennezichnet, daß die Änderung der Wellenlänge des von der Gasentladung emittierten Lichtes erfaßt und hinsichtlich einer Aussage über die Art des flüchtigen Behältnisinhaltsstoffes ausgewertet wird.

7. Verfahren nach einem der Ansprüche 1 bis 6 zur Prüfung von Kartuschen für ein treibgasfreies Aerosol mit einem austauschbaren, das Arzneimittel enthaltenden Vorratsbehälter, der aus einem formstabilen Außenbehälter und einem flexiblen, auf Dichtheit zu prüfenden Innenbehälter besteht.

8. Verfahren nach einem der Ansprüche 1 bis 7, **dadurch gekennzeichnet, daß** die Dichtigkeitsprüfung als routinemäßige Prüfung im Rahmen der Befüllung der in hohen Stückzahlen vorliegenden Behältnisse durchgeführt wird.

9. Verfahren nach Anspruch 8, **dadurch gekennzeichnet, daß** mehrere Behältnisse in dem Vakuum bereitgehalten werden.

10. Vorrichtung zur zerstörungsfreien Dichtigkeitsprüfung von mit Flüssigkeit gefüllten Behältnissen, mit:
- einem Rezipienten (2), in dem ein gegenüber dem Atmosphärendruck verminderter Druck aufrechterhaltbar ist und in dem die zu prüfenden Behältnisse bereitgehalten sind,
- einer Gasentladungsstrecke (6) in einem mit dem Rezipienten (2) verbundenen Gefäß (1, 1a - 1d) und elektrischen Vorrichtungen (4, 5, 7, 8) zum Betreiben der Gasentladung,
- einer lichtempfindlichen Sensor-Anordnung (9) zum Erfassen des von der Gasentladung emittierten Lichtes, und
- einer Auswerteschaltung (10) zum Auswerten des emittierten Lichtes auf Veränderungen durch infolge einer Leckage in den geprüften Behältnissen austretende flüchtige Behältnisinhaltsstoffe.

11. Vorrichtung nach Anspruch 10, **dadurch gekennzeichnet, daß** die elektrischen Vorrichtungen (4, 5, 7, 8) zum Betreiben der Gasentladung eine Hochspannungsquelle (7) aufweisen, in der hochgespannte elektrische Energie erzeugbar ist, die mittels Elektroden (4, 5) oder kapazitiv oder induktiv in die Gasentladungsstrecke (6) einspeisbar ist.

12. Vorrichtung nach Anspruch 11, **dadurch gekennzeichnet, daß** die Hochspannung eine Gleichspannung oder eine Wechselspannung mit einer Frequenz größer 50 Hz, vorzugsweise von 30-40 kHz, ist.

13. Vorrichtung nach einem der Ansprüche 10 bis 12, **dadurch gekennzeichnet, daß** die lichtempfindliche Sensor-Anordnung (9) sowie die Auswerteschaltung (10) so ausgebildet sind, daß Helligkeitsänderungen und/oder Änderungen der Wellenlänge des emittierten Lichtes erfaßbar und auswertbar sind.

14. Verrichtung nach Anspruch 13, **dadurch gekennzeichnet, daß** zur Messung der Helligkeitsänderungen des emittierten Lichtes als lichtempfindliche Sensor-Anordnung (9) ein in einem weiten Bereich des Lichtspektrums wellenlängenunabhängiger Photosensor, wie Photowiderstand, Photodiode oder Photozelle, vorgesehen ist.

15. Vorrichtung nach Anspruch 13 oder 14, **dadurch gekennzeichnet, daß** als lichtempfindliche Sensoranordnung ein Photosensor (9) mit einem spezifischen Empfindlichkeitsmaximum bei einer bestimmten Wellenlänge vorgesehen ist, wobei das Empfindlichkeitsmaximum von der Art des zu detektierenden Stoffs bestimmt ist.

16. Vorrichtung nach einem der Ansprüche 10 bis 15 mit Einspeisung der Hochspannung über Elektroden, **dadurch gekennzeichnet, daß** das Gefäß mit der Gasentladungsstrecke aus einem Röhrensystem gebildet ist, das aus zwei oder mehr Röhren (1c, 1d) besteht, die koaxial ineinander angeordnet sind, derart, daß die eine Seite der Röhren in einem Metallflansch (11) eingedichtet ist, der gleichzeitig als erste Elektrode (5) dient, während die andere Seite der äußeren Röhre (1c) mit zwei Kugelschliffteilen (12, 13) verschlossen ist, von denen ein Teil die zweite Elektrode (4) trägt.

17. Vorrichtung nach einem der Ansprüche 10 bis 16, **dadurch gekennzeichnet, daß** der Rezipient (2), in dem die zu prüfenden mit Flüssigkeit gefüllten Behältnisse bereitgehalten sind, durch eine evakuierbare Mehrfachstation zur parallelen Prüfung mehrerer Behältnisse im Rahmen einer routinemäßigen Dichtigkeitsprüfung hoher Stückzahlen gebildet ist.

18. Vorrichtung nach einem der Ansprüche 10 bis 16, **dadurch gekennzeichnet, daß** der Rezipient (2), in dem die zu prüfenden mit Flüssigkeit gefüllten Behältnisse bereitgehalten sind, durch eine evakuierbare große Prüfkammer zur gemeinsamen Aufnahme mehrerer Behältnisse im Rahmen einer routinemäßigen Dichtigkeitsprüfung hoher Stückzahlen gebildet ist.

## Claims

1. Process for non-destructively testing fluid-fitted containers for leaktightness, comprising the steps of:
- holding the fluid-filled containers in readiness in a vacuum,
- producing a gas discharge in the vacuum,
- detecting the light emission from the gas discharge, and
- evaluating the light emission for changes caused by volatile container contents escaping as a result of a leak in the containers being tested.

2. Process according to claim 1, **characterised in that** the holding of the containers and the production of the gas discharge take place at a pressure between 0.5 and 50 mbar, preferably at a pressure between 1 and 4 mbar.

3. Process according to claim 1 or 2, **characterised in that** the gas discharge is effected by means of high-voltage electrical energy which is supplied by means of electrodes or capacitively or inductively.

4. Process according to claim 3, **characterised in that** the gas discharge is operated at a high voltage which is a d.c. voltage or an a.c. voltage with a frequency greater than 50 Hz, preferably 30 - 40 kHz.

5. Process according to one of claims 1 to 4, **characterised in that** the reduction in the brightness of the light emitted by the gas discharge, compared with the background brightness when only the residual gas molecules of the air in the vacuum are present, is detected, and this change in brightness is evaluated in connection with a corresponding, empirically determined calibration curve with regard to the concentration of the volatile container contents in question.

6. Process according to one of claims 1 to 5, **characterised in that** the change in the wavelength of the light emitted by the gas discharge is detected and evaluated to obtain an indication of the nature of the volatile container contents.

7. Process according to one of claims 1 to 6 for testing cartridges for a propellant free aerosol having an exchangeable storage container which holds the pharmaceutical composition, said container consisting of a dimensionally stable outer container and a flexible inner container which is to be tested for leaktightness.

8. Process according to one of claims 1 to 7, **characterised in that** the testing for leaktightness is carried out as a routine test in the course of filling the containers, which are present in large numbers.

9. Process according to claim 8, **characterised in that** a pluratity of containers are held in readiness in the vacuum.

10. Apparatus for non-destructive testing of fluid-filled containers for leaktightness, having:
- a receptacle (2) in which a pressure lower than atmospheric pressure can be maintained and in which the containers to be tested are held in readiness,
- a gas discharge space (6) in a vessel (1, 1a-1 d) connected to the receptacle (2) and electrical equipment (4, 5, 7, 8) for producing the gas discharge,
- a light-sensitive sensor arrangement (9) for detecting the light emitted from the gas discharge, and
- an evaluating circuit (10) for evaluating the light emitted for changes caused by volatile container contents escaping as a result of a leak in the containers being tested.

11. Apparatus according to claim 10, **characterised in that** the electrical equipment (4. 5, 7, 8) for producing the gas discharge comprises a high voltage source (7) in which high-voltage electrical energy can be generated which can be fed into the gas discharge space (6) by means of electrodes (4, 5) or capacitively or inductively.

12. Apparatus according to claim 11, **characterised in that** the high voltage is a d-c. voltage or an a.c. voltage with a frequency greater than 50 Hz, preferably 30 - 40 kHz.

13. Apparatus according to one of claims 10 to 12, **characterised in that** the light-sensitive sensor arrangement (9) and the evaluating circuit (10) are constructed so that changes in brightness and/or changes in the wavelength of the light emitted can be detected and evaluated.

14. Apparatus according to claim 13, **characterised in that**, in order to measure changes in the brightness of the emitted light, there is provided, as the light-sensitive sensor arrangement (9), a photosensor which is independent of wavelength within a wide range of the light spectrum, such as a photoresistor, photodiode or photoelectric cell.

15. Apparatus according to claim 13 or 14, **characterised in that** there is provided, as the light-sensitive sensor arrangement, a photosensor (9) with a specific sensitivity maximum at a specified wavelength, the sensitivity maximum being determined by the nature of the substance which is to be detected.

16. Apparatus according to one of claims 10 to 15 wherein the high voltage is supplied through electrodes, **characterised in that** the vessel with the gas discharge space is formed from a tube system which consists of two or more tubes (1c, 1d) arranged coaxially one inside the other such that the one end of the tubes is sealed in a meta) flange (11) which simultaneously serves as the first electrode (5), while the other end of the outer tube (1c) is closed off by two ground ball-and-socket joint parts (12,13), one of which carries the second electrode (4).

17. Apparatus according to one of claims 10 to 16, **characterised in that** the receptacle (2) in which the fluid-filled containers to be tested are held in readiness is formed by an evacuatable multiple station for parallel testing of a plurality of containers in the course of routine testing of large numbers of items for leaktightness.

18. Apparatus according to one of claims 10 to 16, **characterised in that** the receptacle (2) in which the fluid filed containers to be tested are held in readiness is formed by an evacuatable large examination chamber for holding a plurality of containers in the course of routine testing of large numbers of items for leaktightness.

## Revendications

1. Procédé de vérification non destructive de l'étanchéité de récipients remplis de fluide, comportant les étapes de:
- conservation sous vide des récipients remplis de fluide,
- exécution d'une décharge gazeuse dans le vide,
- capture de l'émission lumineuse sortant de la décharge gazeuse, et
- évaluation de l'émission lumineuse en fonction des modifications résultant d'une fuite des composants volatils s'échappant des récipients contrôlés.

2. Procédé selon la revendication 1, **caractérisé en ce que** la conservation des récipients et l'exécution de la décharge gazeuse se produisent avec une pression entre 0,5 et 50 mbars, de préférence avec une pression entre 1 et 4 mbars.

3. Procédé selon la revendication 1 ou 2, **caractérisé en ce que** la décharge gazeuse est activée par de l'énergie électrique à haute tension, laquelle est alimentée au moyen d'électrodes ou par dispositif capacitif ou inductif.

4. Procédé selon la revendication 3, **caractérisé en ce que** la décharge gazeuse est activée par une haute tension, laquelle est une tension continue, ou une tension alternative avec une fréquence supérieure à 50 Hz, de préférence entre 30 et 40 kHz.

5. Procédé selon l'une des revendications 1 à 4, **caractérisé en ce que** la diminution de la luminosité de la lumière émise par la décharge gazeuse est acquise par rapport à la luminosité de base uniquement par présentation des molécules du gaz résiduel de l'air dans le vide et que cette modification de la luminosité est évaluée en liaison avec une courbe de calibrage appropriée et déterminée de façon empirique en ce qui concerne la concentration de chaque composant volatil du récipient.

6. Procédé selon l'une des revendications 1 à 5, **caractérisé en ce que** la modification de la longueur d'onde de la lumière émise par la décharge gazeuse est acquise et qu'elle est évaluée en vue d'une information relative au type du composant volatil du récipient.

7. Procédé selon l'une des revendications 1 à 6 pour le contrôle de cartouches destinées à un aérosol sans gaz propulseur, avec un réservoir interchangeable, contenant le produit pharmaceutique, lequel réservoir se compose d'un conteneur externe de forme stable et d'un conteneur interne souple dont l'étanchéité doit être contrôlée.

8. Procédé selon l'une des revendications 1 à 7, **caractérisé en ce que** la vérification de l'étanchéité est exécutée sous la forme d'un examen de routine dans le cadre du remplissage des récipients présents en un nombre élevé de pièces.

9. Procédé selon la revendication 8, **caractérisé en ce que** plusieurs récipients sont conservés sous vide.

10. Dispositif pour la vérification non destructive de l'étanchéité de récipients remplis de liquide, avec :
- un récipient (2) dans lequel est maintenue une pression réduite par rapport à la pression atmosphérique et dans lequel sont conservés les récipients à vérifier,
- une ligne de décharge gazeuse (6) dans une cuve (1, 1a-1d) reliée au récipient (2) et des dispositifs électriques (4, 5, 7, 8) pour l'exécution de la décharge gazeuse,
- un dispositif de capteurs sensibles à la lumière (9) pour la capture de la lumière émise par la décharge gazeuse, et
- un circuit d'évaluation (10) pour l'évaluation de la lumière émise en fonction des modifications résultant d'une fuite des composants volatils s'échappant des récipients contrôlés.

11. Dispositif selon la revendication 10, **caractérisé en ce que** les dispositifs électriques (4, 5, 7, 8) pour l'exécution de la décharge gazeuse comportent une source à haute tension (7), au sein de laquelle est générée de l'énergie électrique à haute tension, qui peut être alimentée dans la ligne de décharge gazeuse (6) au moyen d'électrodes (4, 5) ou par dispositif capacitif ou inductif.

12. Dispositif selon la revendication 11, **caractérisé en ce que** la haute tension est une tension continue, ou une tension alternative avec une fréquence supérieure à 50 Hz, de préférence entre 30 et 40 kHz.

13. Dispositif selon l'une des revendications 10 à 12, **caractérisé en ce que** le dispositif de capteurs sensibles à la lumière (9) ainsi que le circuit d'évaluation (10) sont constitués de telle sorte que les modifications de la luminosité et / ou les modifications de la longueur d'onde de la lumière émise peuvent être saisies et peuvent être évaluées.

14. Dispositif selon la revendication 13, **caractérisé en ce que** pour la mesure des modifications de la luminosité de la lumière émise, il est prévu, en tant que dispositif de capteurs sensibles à la lumière (9) dans une vaste zone du spectre lumineux, un capteur optique indépendant de la longueur d'onde, tel qu'une résistance photoélectrique, une photodiode ou une cellule photoélectrique.

15. Dispositif selon la revendication 13 ou 14, **caractérisé en ce qu'**il est prévu, comme dispositif de capteurs sensibles à la lumière, un capteur optique (9) avec une sensibilité maximale spécifique pour une longueur d'onde déterminée, moyennant quoi la sensibilité maximale est déterminée en fonction du type de la matière à détecter.

16. Dispositif selon l'une des revendications 10 à 15, avec un stockage de la haute tension via des électrodes, **caractérisé en ce que** la cuve avec la ligne de décharge gazeuse est formée à partir d'un système de tuyaux, qui se compose de deux ou de plusieurs tuyaux (1c, 1d) qui sont disposés coaxialement l'un dans l'autre, de telle sorte qu'un côté des tuyaux est rendu étanche dans une bride métallique (11) qui sert en même tempe de première électrode (5), tandis que l'autre côté du tuyau extérieur (1c) est fermé avec deux robinets à boisseau sphérique (12, 13), dont une partie porte la deuxième électrode (4).

17. Dispositif selon l'une des revendications 10 à 16, **caractérisé en ce que** le récipient (2) dans lequel sont conservés les récipients remplis de liquide devant être contrôlés, est composé d'un poste multiple que l'on peut évacuer, destiné au contrôle en parallèle de plusieurs récipients dans le cadre d'un contrôle de routine de l'étanchéité d'un grand nombre de pièces.

18. Dispositif selon l'une des revendications 10 à 16, **caractérisé en ce que** le récipient (2) dans lequel sont conservés les récipients remplis de liquide devant être contrôlés, est composé d'une grande chambre de contrôle que l'on peut évacuer, destinée à la réception commune de plusieurs récipients dans le cadre d'un contrôle de routine de l'étanchéité d'un grand nombre de pièces.
